# EUROPEAN PATENT APPLICATION

(11) **EP 4 529 034 A1**
(43) Date of publication of application: **26.03.2025**
(21) Application number: 22942601.0
(22) Date of filing: 16.05.2022
(51) Int. Cl.: H04B 7/0417

(54) **WIRELESS COMMUNICATION SYSTEM**

(71) Applicant: MITSUBISHI ELECTRIC CORPORATION, Chiyoda-ku Tokyo 100-8310 (JP)
(72) Inventor: IWAYAMA Naofumi, Tokyo 100-8310 (JP); SHIMODA Tadahiro, Tokyo 100-8310 (JP); MOCHIZUKI Mitsuru, Tokyo 100-8310 (JP); HASEGAWA Fumiki, Tokyo 100-8310 (JP); MAKINO Shinya, Tokyo 100-8310 (JP); ANDO Nobuhiko, Tokyo 100-8310 (JP); NAKAZAWA Masayuki, Tokyo 100-8310 (JP)
(74) Representative: Pfenning, Meinig & Partner mbB
(86) International application number: PCT/JP2022/020424
(87) International publication number: WO 2023/223396

(57) **Abstract**

A communication system includes a first UE (110A) and a second UE (110B) communicating with the first UE (110A) by SL communication, the first UE (110A) transmits, to the second UE (110B), encoded channel state information, which is channel state information encoded by using an encoding model learned for the channel state information, which is information for reporting the channel state of the SL communication, and the second UE (110B) decodes the encoded channel state information by using a decoding model learned for channel state information.

## Description

### TECHNICAL FIELD

The present disclosure relates to a wireless communication system.

### BACKGROUND ART

The 3rd Generation Partnership Project (3GPP), which is a standardization organization for mobile communication systems, has been working on standards for various services or applications that use Side Link (SL) communication (also referred to as the PC5 communication).

For example, in SL communication, similar to the adaptive transmission technology used in communications between terminals and base stations to enable adaptive modulation or rank adaptation (adaptive control of the number of transmission layers) in Multiple-Input Multiple-Output (MIMO) transmission, the data-transmitting terminal device transmits the SL-Channel State Information (CSI)-Reference Signal (RS), and the data-receiving terminal device receives the SL-CSI-RS, analyzes the channel state, and transmits the results of the analysis as an SL-CSI report to the data-transmitting terminal device.

### PRIOR ART REFERENCE

### NON PATENT REFERENCE

Non Patent Reference 1: 3GPP TS38.473 V16.6.0

### SUMMARY OF INVENTION

### PROBLEM TO BE SOLVED BY THE INVENTION

However, in conventional communication systems, the bit data in the SL-CSI report occupies wireless resources, which makes the wireless resources available for user data run short.

In view of the above problems, an object of one or more aspects of the present disclosure is to enable the application of Artificial Intelligence (AI) to the encoding and decoding of data in SL communication and to improve the efficiency of the communication system.

### MEANS OF SOLVING THE PROBLEM

A wireless communication system according to an aspect of the present disclosure is a wireless communication system provided with a first terminal device and a second terminal device that communicates with the first terminal device by Side Link (SL) communication, wherein the first terminal device transmits, to the second terminal device, encoded channel state information, which is channel state information encoded by using an encoding model learned for channel state information, which is information for reporting the channel state of the SL communication, and the second terminal device decodes the encoded channel state information by using a decoding model learned for the channel state information.

### EFFECTS OF THE INVENTION

One or more aspects of the present disclosure can apply AI to the encoding and decoding of data in SL communication to improve the efficiency of communication systems.

### BRIEF DESCRIPTION OF DRAWINGS

FIG. 1 is a block diagram schematically illustrating a configuration of communication systems according to Embodiments 1 to 4.
FIG. 2 is a block diagram schematically illustrating a configuration of UEs in Embodiment 1 to 4.
FIGS. 3A and 3B are block diagrams of example hardware configurations.
FIG. 4 is a block diagram schematically illustrating a configuration of a base station in Embodiments 1 to 4.
FIG. 5 is a block diagram schematically illustrating a configuration of an upper device.
FIG. 6 shows an example of a configuration in which a UE learns the encoding and decoding models and the UE performs inference by using the learned encoding and decoding models in Embodiment 1.
FIG. 7 is a sequence diagram of steps in learning the encoding and decoding models and applying the learned models in Embodiment 1.
FIG. 8 is a schematic diagram illustrating an example of a neural network used in learning the encoding and decoding models.
FIG. 9 shows an example of a configuration in which a base station learns the encoding and decoding models and a UE performs inference by using the learned encoding and decoding models in Embodiment 2.
FIG. 10 is a sequence diagram of steps in learning the encoding and decoding models and applying the learned models in Embodiment 2.
FIG. 11 shows an example of a configuration in which a base station learns the encoding and decoding models and a UE performs inference by using the learned encoding and decoding models in Embodiment 3.
FIG. 12 is a sequence diagram of steps in learning the encoding and decoding models and applying the learned models in Embodiment 3.
FIG. 13 shows an example of the configuration in which a U2N relay learns the encoding and decoding models and a UE performs inference by using the learned encoding and decoding models in Embodiment 4.
FIG. 14 is a sequence diagram of steps in learning the encoding and decoding models and applying the learned models in Embodiment 4.

### MODE FOR CARRYING OUT THE INVENTION

### EMBODIMENT 1

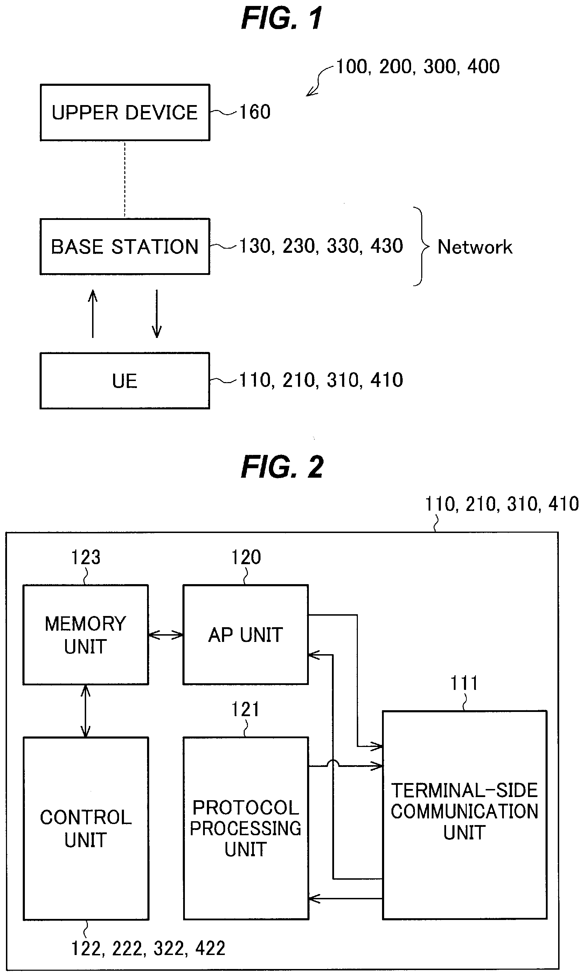

FIG. 1 is a block diagram schematically illustrating a configuration of a communication system 100 according to Embodiment 1.

The communication system 100 includes a User Equipment (UE) 110 as a terminal device, a base station 130 as a base station device, and an upper device 160. The UE 110 is a mobile terminal device here, but is not limited to this example.

The UE 110 is capable of wireless communication with the base station 130 and transmits and receives signals via wireless communication. The UE 110 can also communicate with other UEs 110 via SL communication, and can also communicate via relay.

The base station 130 constitutes a radio access network.

The radio access network is described here as a fifth generation (hereinafter also referred to as the "5G") radio access system, but is not limited to this example.

When the radio access network is a 5G system as discussed in the 3GPP, the radio access network is referred to as the Next Generation Radio Access Network (NG-RAN). In this case, the base station 130 is referred to as the NG-RAN NodeB (gNB). The core network is referred to as the 5G Core. When the radio access network is the LTE system discussed in 3GPP, the radio access network is referred to as the Evolved Universal Terrestrial Radio Access Network (E-UTRAN). In this case, the base station 130 is referred to as the E-UTRAN NodeB (eNB).

FIG. 2 is a block diagram schematically illustrating a configuration of the UE 110.

The UE 110 includes a terminal-side communication unit 111, an application unit (hereinafter referred to as the AP unit) 120, a protocol processing unit 121, a control unit 122, and a memory unit 123.

First, the transmission process of the UE 110 is described.

Control data from the protocol processing unit 121 or user data from the AP unit 120 is provided to the terminal-side communication unit 111.

The terminal-side communication unit 111 converts the data into a transmission signal for wireless communication and transmits the transmission signal to the destination with one or more antennas.

Next, the reception process of the UE 110 is described.

The terminal-side communication unit 111 receives the wireless signal from the source as a received signal with one or more antennas and generates control data or user data from the received signal. The terminal-side communication unit 111 then sends the control data to the protocol processing unit 121 and the user data to the AP unit 120.

The above series of processes in the UE 110 are controlled by the control unit 122. Although not shown in the figure, the control unit 122 is connected to the terminal-side communication unit 111, the AP unit 120, and the protocol processing unit 121.

The number of antennas used by the UE 110 for transmission may be the same as or different from that for reception.

Here, the AP unit 120 in Embodiment 1 functions as a learning unit that performs a learning function or an inference unit that performs an inference function. These processes are described below.

The memory unit 123 stores programs and data necessary for the process in the UE 110. For example, the memory unit 123 stores at least one of the encoding and decoding models described below.

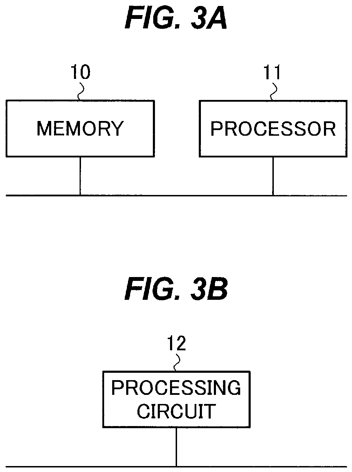

As shown in FIG. 3A, for example, some or all of the AP unit 120, the protocol processing unit 121, and the control unit 122 described above can be composed of a memory 10 and a processor 11, such as a Central Processing Unit (CPU), which executes a program stored in the memory 10. Such a program may be provided over a network or recorded in/on a recording medium. That is, such a program may be provided as, e.g., a program product.

In addition, as shown in FIG. 3B, for example, some or all of the AP unit 120, the protocol processing unit 121, and the control unit 122 may be configured in a processing circuit 12, such as a single circuit, a composite circuit, a processor running on a program, a parallel processor operating on a program, an Application Specific Integrated Circuit (ASIC), or Field Programmable Gate Array (FPGA).

Thus, the AP unit 120, the protocol processing unit 121, and the control unit 122 can be implemented by processing circuitry.

The terminal-side communication unit 111 can be implemented by a wireless communication interface, which is an interface for wireless communication.

The memory unit 123 can be implemented by a non-volatile memory or storage such as a Hard Disk Drive (HDD) or a Solid State Drive (SDD).

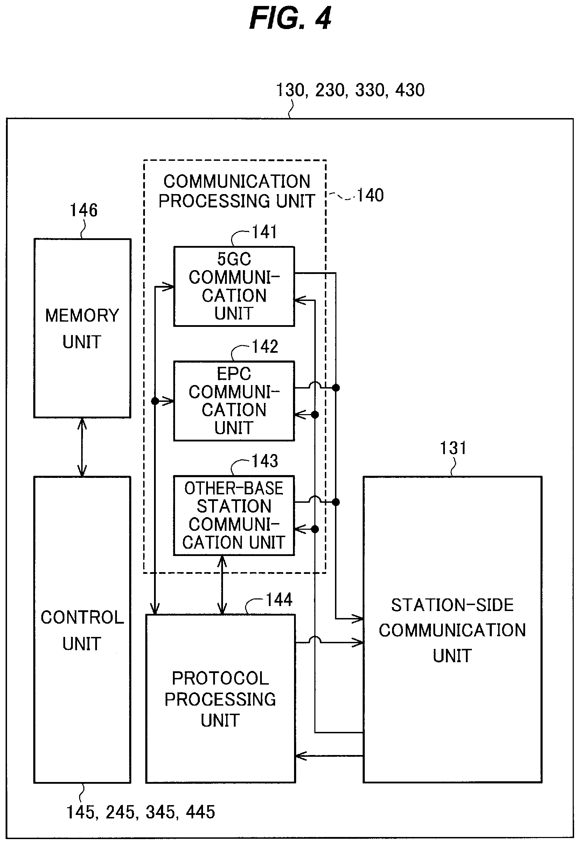

FIG. 4 is a block diagram schematically illustrating a configuration of the base station 130.

The base station 130 is provided with a station-side communication unit 131, a communication processing unit 140, a protocol processing unit 144, a control unit 145, and a memory unit 146.

The communication processing unit 140 includes a 5GC communication unit 141 that transmits and receives data to and from a 5GC such as an upper device 160, an EPC communication unit 142 that transmits and receives data to and from an Evolved Packet Core (EPC) such as a Mobility Management Entity (MME), and an other-base station communication unit 143 that transmits and receives data to and from other base stations. The 5GC communication unit 141, the EPC communication unit 142, and the other-base station communication unit 143 pass information to and from the protocol processing unit 144, respectively.

First, the transmission process of the base station 130 is described.

Control data from the protocol processing unit 144, or user data or control data from the 5GC communication unit 141, the EPC communication unit 142 or the other-base station communication unit 143 is provided to the station-side communication unit 131.

The station-side communication unit 131 converts the data into a transmission signal for wireless communication and transmits the transmission signal to the destination with one or more antennas.

Next, the reception process of the base station 130 is described.

The station-side communication unit 131 receives a wireless signal from the transmission source as a received signal with one or more antennas and generates control data or user data from the received signal. The station-side communication unit 131 then sends the control data to the protocol processing unit 144, the 5GC communication unit 141, the EPC communication unit 142, or the other-base station communication unit 143, and sends the user data to the 5GC communication unit 141, the EPC communication unit 142 or the other-base station communication unit 143.

The above series of processes at the base station 130 are controlled by the control unit 145. Although not shown in the figure, the control unit 145 is connected to the station-side communication unit 131, the communication processing unit 140, and the protocol processing unit 144.

The number of antennas used by the base station 130 for transmission may be the same as or different from that for reception.

The number of antennas of the UE 110 may be the same as or different from that of the base station 130.

The memory unit 146 stores programs and data necessary for processing at the base station 130.

As shown in FIG. 3A, for example, some or all of the communication processing unit 140, the protocol processing unit 144, and the control unit 145 described above can be composed of the memory 10 and the processor 11, such as a CPU, which executes a program stored in the memory 10. Such a program may be provided over a network or recorded in/on a recording medium. That is, such a program may be provided as, e.g., a program product.

In addition, as shown in FIG. 3B, for example, some or all of the communication processing unit 140, the protocol processing unit 144, and the control unit 145 may also be configured in the processing circuit 12, such as a single circuit, a composite circuit, a processor operating on a program, a parallel processor operating on a program, an ASIC, or an FPGA.

Thus, the communication processing unit 140, the protocol processing unit 144, and the control unit 145 can be implemented by processing circuitry.

The station-side communication unit 131 can be implemented by a wireless communication interface, which is an interface for wireless communication.

The memory unit 126 can be implemented by a non-volatile memory or storage such as a Hard Disk Drive (HDD) or a Solid State Drive (SDD).

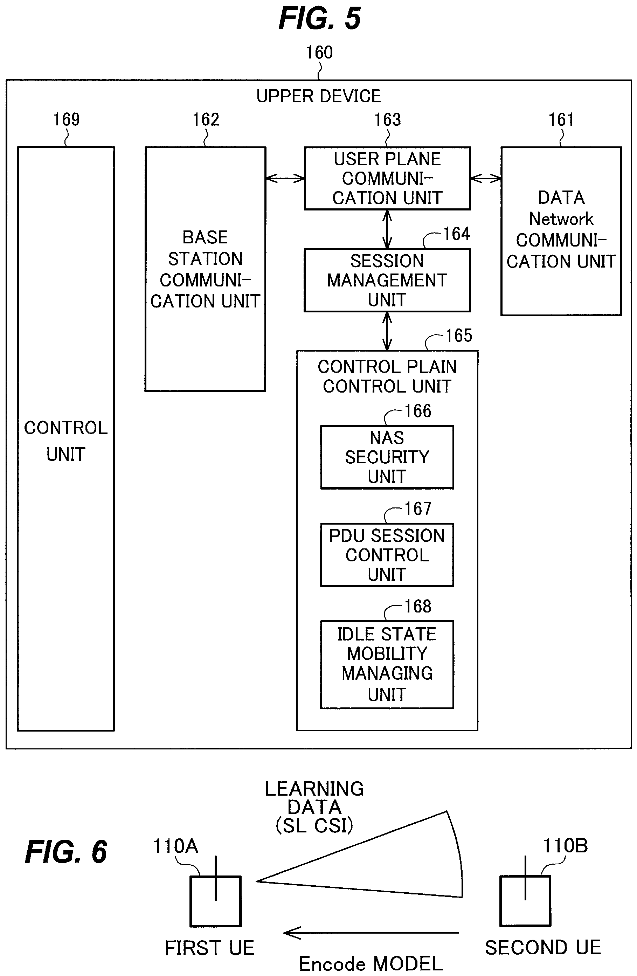

FIG. 5 is a block diagram schematically illustrating a configuration of the upper device 160.

Since the 5G system is used as the radio access network in this embodiment, the upper device 160 is also referred to as the 5G Core (5GC) unit.

FIG. 5 shows the case where the upper device 160 shown in FIG. 1 includes the Access and Mobility Management Function (AMF) configuration, Session Management Function (SMF) configuration, and User Plane Function (UPF) configuration.

The upper device 160 has a Data Network communication unit 161, a base station communication unit 162, a user plane communication unit 163, a session management unit 164, a control plane control unit 165, and a control unit 169.

The Data Network communication unit 161 transmits and receives data between the upper device 160 and the Data Network.

The base station communication unit 162 transmits and receives data between the upper device 160 and the base station 130 through the NG interface.

When the data received from the Data Network is user data, the user data is sent from the Data Network communication unit 161 to the base station communication unit 162 via the user plane communication unit 163, and from the base station communication unit 162 to the base station 130.

When the data received from the base station 130 is user data, the user data is sent from the base station communication unit 162 to the Data Network communication unit 161 via the user plane communication unit 163, and from the Data Network communication unit 161 to the Data Network.

When the data received from the Data Network is control data, the control data is sent from the Data Network communication unit 161 to the session management unit 164 via the user plane communication unit 163.

The session management unit 164 sends the control data to the control plane control unit 165.

When the received data from the base station 130 is control data, the control data is sent from the base station communication unit 162 to the control plane control unit 165. The control plane control unit 165 sends the control data to the session management unit 164.

The control plane control unit 165 performs overall processing for the control plane (hereinafter sometimes referred to as the C-Plane).

The control plane control unit 165 includes a Non-Access Stratum (NAS) security unit 166, a PDU session control unit 167, and an idle state mobility management unit 168.

The NAS security unit 166 is responsible for NAS message security or the like.

The PDU session control unit 167 manages, among other things, PDU sessions between the UE 110 and the upper device 160.

The idle state mobility management unit 168 manages the standby state mobility, generates and controls paging signals during the standby state, adds, deletes, updates, and searches for the tracking areas of one or more UEs 110 under the management, and manages the tracking area list. The standby state is also referred to as the idle state, the RRC_IDLE state, or simply idle.

The series of processes of the upper device 160 are controlled by the control unit 169. Although not shown in the figure, the control unit 169 is connected to the Data Network communication unit 161, the base station communication unit 162, the user plane communication unit 163, the session management unit 164, and the control plane control unit 165.

As shown in FIG. 3A, for example, some or all of the Data Network communication unit 161, the base station communication unit 162, the user plane communication unit 163, the session management unit 164, the control plane control unit 165, and the control unit 169 can be composed of the memory 10 and the processor 11, such as a CPU, which executes the program stored in memory 10. Such a program may be provided over a network or recorded in/on a recording medium. That is, such a program may be provided as, e.g., a program product.

In addition, as shown in FIG. 3B, for example, some or all of the Data Network communication unit 161, the base station communication unit 162, the user plane communication unit 163, the session management unit 164, the control plane control unit 165, and the control unit 169 may also be configured in the processing circuit 12, such as a single circuit, a composite circuit, a processor operating on a program, a parallel processor operating on a program, an ASIC, or an FPGA.

Thus, the Data Network communication unit 161, the base station communication unit 162, the user plane communication unit 163, the session management unit 164, the control plane control unit 165, and the control unit 169 can be implemented by processing circuitry.

In Embodiment 1, adaptive transmission technology may be applied to the SL communication. Here, the data transmitting side may use the SL-CSI-RS and the SL-CSI reports to determine the channel state between each transmitting antenna and each receiving antenna. In this case, the data-receiving UE 110 receives the SL-CSI-RS transmitted from the data-transmitting UE 110, analyzes the channel state, and transmits the results of the analysis as an SL-CSI report to the data-transmitting terminal device.

The SL-CSI can also reduce the amount of bit data by generating and applying encoding and decoding models by using a learning device.

In Embodiment 1, the data-receiving UE 110 performs the learning of the encoding and decoding models. The configuration is described below.

FIG. 6 shows an example of a configuration in which the UE 110 learns the encoding and decoding models, and the UE 110 performs inference by using the learned encoding and decoding models in Embodiment 1.

In Embodiment 1, the second UE 110B learns the encoding and decoding models, and the first UE 110A and the second UE 110B communicate by using the learned models.

In FIG. 6, the first UE 110A is the data-receiving terminal device that transmits the SL-CSI, and the second UE 110B is the data-transmitting terminal device that receives the SL-CSI.

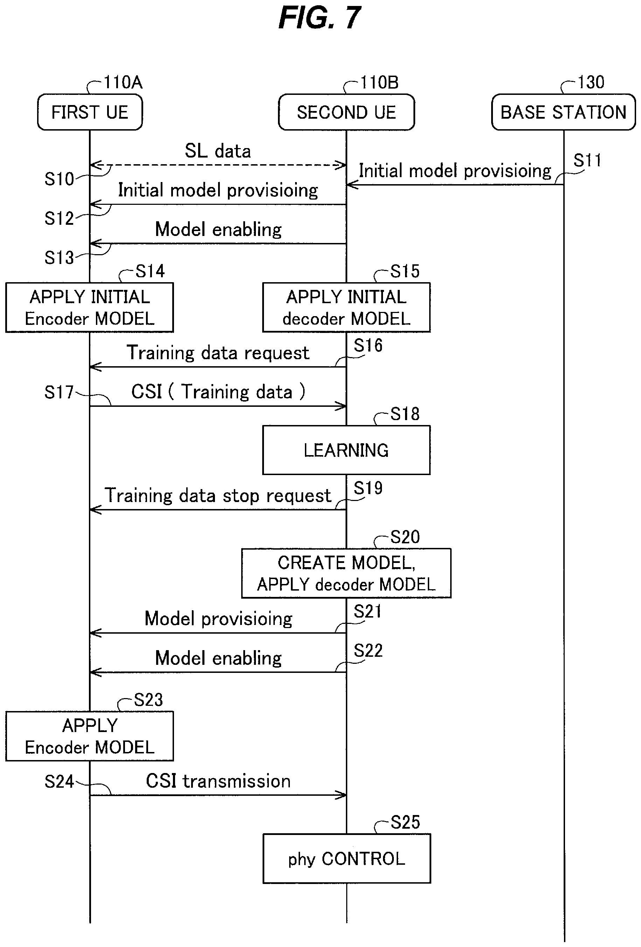

FIG. 7 is a sequence diagram of steps in learning the encoding and decoding models and applying the learned models in Embodiment 1.

First, the control unit 122 of the first UE 110A and the control unit 122 of the second UE 110B establish SL communication with the PC5 interface via their respective protocol processing unit 121 and terminal-side communication unit 111 (S10). As a result, the first UE 110A and the second UE 110B are ready to communicate.

Next, the control unit 145 of the base station 130 transmits the initial encoding model, which is the encoding model in the initial state, and the initial decoding model, which is the decoding model in the initial state, to each connected UE 110 via the protocol processing unit 144, the communication processing unit 140, and the station-side communication unit 131 (S11). Here, the second UE 110B executing data-transmitting receives them. Specifically, the control unit 122 of the second UE 110B obtains the initial encoding and decoding models via the terminal-side communication unit 111 and the protocol processing unit 121 and stores the initial encoding and decoding models in the memory unit 123.

Here, each of the encoding model data and the decoding model data may consist of, e.g., the following information (1) to (11).

The information may include, (1) type of input values, (2) number of nodes in the input layer, (3) depth of the hidden layer, (4) number of nodes in the hidden layer, (5) function to be applied to each node in the hidden layer, (6) number of nodes in the output layer, (7) function to be applied to each node in the output layer, (8) branch weighting factor, (9) information about the nodes at which branches join, (10) information about the default operation mode of the learning device, and (11) binary information about the model.

The "type of input values" may be, e.g., information indicating that it is an SL-CSI report. This information may include details of the SL-CSI report to be input, e.g., information about the SL-CSI-RS resource to be measured. The resources of the SL-CSI-RS to be measured are, e.g., time, frequency, or antenna port. The UE 110 may use the information to perform the encoding process of the SL-CSI report. According to this, malfunctions due to recognition discrepancies between the UE 110 may be able to be avoided.

The "type of input values" may include information on the type of SL-CSI-RS to be measured. This information may be, e.g., Zero-Power (ZP)-CSI-RS, Non-Zero-Power (NZP)-CSI-RS, or Channel State Information-Interference Measurement (CSI-IM). According to this, for example, flexibility in channel measurement can be improved.

The ZP-CSI-RS and the NZP-CSI-RS are specified in 3GPP TS38.211. The CSI-IM is specified in 3GPP TS38.214.

Furthermore, the "type of input values" may be information about other input values. For example, the "type of input values" may be information about the result of positioning signal reception. According to this, for example, other input values can be encoded or decoded, and then the efficiency of the communication system can be improved.

The "number of nodes in the input layer" may be, e.g., the number of nodes in the input layer itself or an identifier representing the number of nodes in the input layer. The correlating the number of nodes in the input layer with the identifier may be predetermined by a standard, determined by the base station 130 and communicated to the UE 110, or determined by a core NetWork (NW) device (not shown) with, e.g., AMF and communicated to at least one of the base station 130 and UE 110. The UE 110 may use that information to configure the input layer of the encoding model. This allows, e.g., the encoding model to be constructed at the UE 110.

The "depth of the hidden layer" may be information about the depth of the hidden layer in the encoding unit (not shown). The UE 110 may use this information to construct the encoding model. This allows, e.g., the encoding model to be constructed at the UE 110.

The "number of nodes in the hidden layer" may include information about the number of nodes in each hidden layer. Instead of the information about the number of nodes itself, an identifier representing the number of nodes may be used. The correlating the number of nodes in the hidden layer with the identifier representing the number may be predetermined by a standard, determined by the base station 130 and communicated to the UE 110, or determined by a core NW device with, e.g., AMF (not shown), and communicated to at least one of the base station 130 and UE 110. The UE 110 may use this information to configure the hidden layer of the encoding model. This allows, e.g., the encoding model to be constructed at the UE 110.

The "function to be applied to each node in the hidden layer" may include information about a function to be applied to the input values of each hidden layer. The function may be, e.g., a sigmoid function or a hyperbolic tangent function. As another example, the function may be a linear function, or the function may not be applied, in other words, the input and output values to the hidden layer may be equal. The UE 110 may use that information to construct the hidden layer of the encoding model. The "function to be applied to each node in the hidden layer" information may, e.g., improve the flexibility of at least one of the encoding and decoding models.

The "function to be applied to each node in the hidden layer" may include information about offsets that are added to the input values of each hidden layer. The offset may be, e.g., added to a value obtained by multiplying the value of the previous layer for each branch by weighting factor input to each hidden layer and adding the resulting products for each branch. This information allows, e.g., increased flexibility in at least one of the encoding and decoding models.

The information about the "function to be applied to each node in the hidden layer" may be provided for each node. This can improve, e.g., the flexibility of at least one of the encoding and decoding models. As another example, the information may be provided for each hidden layer. In other words, the information can be shared between nodes in the same layer. This allows, e.g., a reduction in the amount of signaling of that information. As another example, the information can be shared between nodes. This allows, e.g., a further reduction in the amount of signaling of the information.

The "number of nodes in the output layer" may include information about the number of nodes in the output layer. Instead of the information about the number of nodes itself, an identifier representing the number of nodes may be used. The correlating the number of nodes in the output layer with the identifier representing the number may be predetermined by a standard, determined by the base station 130 and communicated to the UE 110, or determined by a core NW device with, e.g., AMF (not shown), and communicated to at least one of the base station 130 and UE 110. The UE 110 may use that information to configure the output layer of the encoding model. This allows, e.g., the encoding model to be constructed at the UE 110.

The "function to be applied to each node in the output layer" may be the same information as the "function to be applied to each node in the hidden layer. This has the same effect as the "function to be applied to each node in the hidden layer" described above.

The information about the "function to be applied to each node in the output layer" may be provided for each node. This can improve, e.g., the flexibility of at least one of the encoding and decoding models. As another example, the information can be shared between nodes. This allows, e.g., a reduction in the amount of signaling of that information.

The "branch weighting factor" information may be provided for each branch. The UE 110 may use that information to configure branches between nodes. This allows, e.g., the encoding model to be constructed at the UE 110.

The "information about the node at which branches join" may include information about the nodes at both ends of the branch. That information about the node may be provided, e.g., using the identifier of the entire node, or using a combination of information identifying the layer and information identifying the node within the layer. The UE 110 may use that information to configure branches between nodes. This allows, e.g., the encoding model to be constructed at the UE 110.

With respect to the "information about the node at which branches join", the ends of the branch may span one or more layers. As another example, both ends of a branch may be nodes of the same layer or connected to the same node. This can improve, e.g., flexibility in the encoding model.

The "information about the default operation mode of the learning device" may include information about the operating status of the encoding unit (not shown) of the UE 110 after that notification. That information may be, e.g., information indicating that encoding is performed or that encoding is not performed. The UE 110 may use that information to perform or not perform encoding. This enables, e.g., the prevention of discrepancies in the operation mode of the learning device among the UEs 110, thereby preventing malfunctions in the communication system 100.

The "binary information about the model" may be communicated, e.g., when the base station 130 and the UE 110 use the same platform. The UE 110 may use that information to configure the encoding model. This allows, e.g., a reduction in the amount of signaling between UE 110.

The initial encoding and decoding models may be specific to that base station 130 or common to all base stations 130. Alternatively, unique initial encoding and decoding models may be assigned to each terminal.

It is assumed here that the initial encoding and decoding models are stored in the memory unit 146 of the base station 130.

Next, the control unit 122 of the second UE 110B determines to learn and apply the encoding and decoding models to the SL-CSI feedback from the first UE 110A. Alternatively, the base station may determine to do that and instruct the second UE 110B to do that at step S11. Then, that control unit 122 transfers the initial encoding model received from the base station 130 in step S11 to the first UE 110A via the protocol processing unit 121 and the terminal-side communication unit 111 (S12). The control unit 122 of the first UE 110A receives that initial encoding model via the terminal-side communication unit 111 and the protocol processing unit 121 and stores it in the memory unit 123.

Next, the control unit 122 of the second UE 110B instructs the first UE 110A to apply the received encoding model via the protocol processing unit 121 and the terminal-side communication unit 111 (S13).

The control unit 122 of the first UE 110A receives the instruction via the terminal-side communication unit 111 and the protocol processing unit 121 and applies the encoding model stored in the memory unit 123 according to the instruction (S14).

In the second UE 110B, the control unit 122 also applies the decoding model stored in the memory unit 123 (S15).

Next, for learning, the control unit 122 of the second UE 110B transmits the SL-CSI-RS via the protocol processing unit 121 and the terminal-side communication unit 111 to the first UE 110A to request the SL-CSI report to be transmitted for training (S16). Here, that control unit 122 may specify in the request the number of times N (N is an integer greater than or equal to 1) of the SL-CSI report transmissions for training.

The control unit 122 of the first UE 110A receives that request via the terminal-side communication unit 111 and the protocol processing unit 121. Then, in response to that request, that control unit 122 transmits the SL-CSI report for training via the protocol processing unit 121 and the terminal-side communication unit 111 (S17).

In the second UE 110B that receives that SL-CSI report, the control unit 122 receives the SL-CSI report via the terminal-side communication unit 111 and the protocol processing unit 121 and learns the encoding and decoding models (S18).

For example, the control unit 122 of the second UE 110B learns the encoding and decoding models by so-called supervised learning according to a known neural network model. Here, supervised learning refers to a method in which a pair of data, an input and a label indicating the result, are provided to the learning device as learning data so that the learning device learns the features in those learning data and infers the result from the input. Here, the control unit 122 functions as the learning device. In learning the encoding and decoding models, the input data itself may be used as the resultant data.

A neural network consists of an input layer consisting of a plurality of neurons, an intermediate layer consisting of a plurality of neurons, and an output layer consisting of a plurality of neurons. The intermediate layer may be one layer, or two or more layers, and is also referred to as the hidden layer. As another example, there may be no intermediate layer. This allows, e.g., a reduction in the amount of processing in the communication system 100.

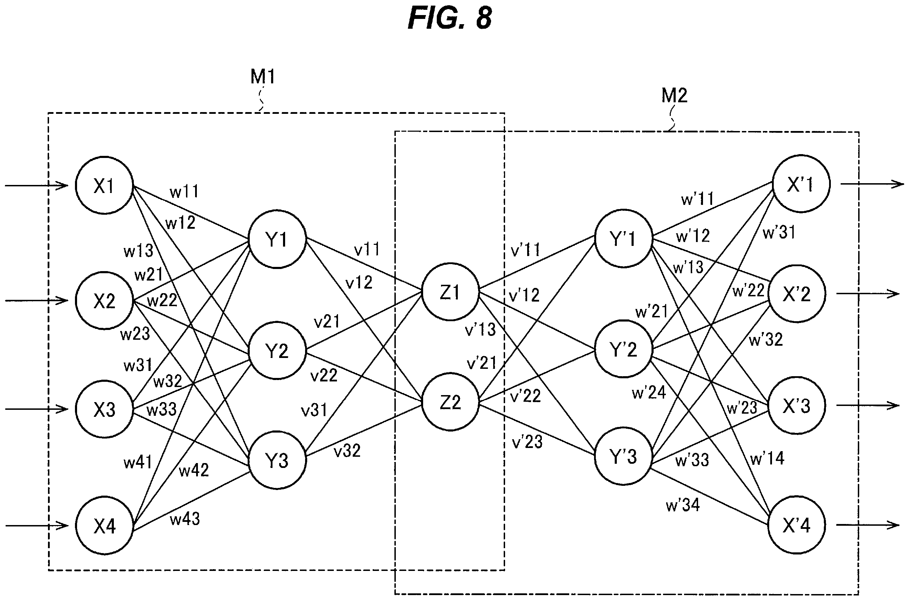

FIG. 8 is a schematic diagram illustrating an example of a neural network used in learning the encoding and decoding models.

In the example shown in FIG. 8, the neural network consists of an encoding model M1 and a decoding model M2.

As shown in FIG. 8, when multiple input values, e.g., the SL-CSI reports in different frequency bands, are input to input layers X1 to X4, the values are multiplied by values w11 to w43 as a weight W1 and input to intermediate layers Y1 to Y3, and the results are further multiplied by the values v11 to v32 as a weight V1 and input to the intermediate layers Z1 to Z2. This result depends on the values of the weights W1 and V1.

In addition, the values in the intermediate layers Z1 to Z2 are multiplied by the values v'11 to v'23 as a weight V'1 and input into the intermediate layers Y'1 to Y'3, and the result is further multiplied by values w'11 to w'34 as a weight W'1 and input to output layers X'1 to X'4. This output result depends on the values of the weights W1, V1, V'1, and W'1.

The values input to the intermediate layers Y1 to Y3, Z1 to Z2, Y'1 to Y'3, and X'1 to X'4 are subjected to operations using predefined functions. The result of the operation in the intermediate layer is multiplied by the weight V1, the weight V'1, or the weight W'1. The predefined function may be, e.g., a sigmoid function, a hyperbolic tangent function, or other functions.

In Embodiment 1, as the neural network, the encoding and decoding models are learned by so-called supervised learning according to the learning data created based on the SL-CSI report sent by the first UE 110A.

Here, the encoding and decoding models, e.g., the weights W1, V1, V'1, and W'1, are learned so that the values of the output layers X'1 to X'4 are the same as those of the input layers X1 to X4.

The SL-CSI report can also be used as learning data for the encoding model by using that SL-CSI report as input and the encoded data of that SL-CSI report as the label of the result. The SL-CSI report can also be used as learning data for the decoding model by using the encoded data of that SL-CSI report as input and that SL-CSI report as the label of the result.

Returning to FIG. 7, the control unit 122 of the second UE 110B repeats the process of steps S17 and S18, and when the number of times of SL-CSI report transmissions reaches a predetermined number of times N, or when it is determined that the data necessary for learning has been obtained, instructs the first UE 110A to stop transmitting the training data via the protocol processing unit 121 and the terminal-side communication unit 111(S19). Thus, that control unit 122 terminates the learning.

The control unit 122 of the second UE 110B then generates updated encoding and decoding models from the learned models obtained in the learning and applies the generated decoding model to its own inference device (S20). Here, the control unit 122 of the second UE 110B functions as the inference device.

The decoding model after learning may be a model in which the numerical values of the elements or the combination of configuration information itself is changed from the information in (1) to (11) above in the initial model.

Next, the control unit 122 of the second UE 110B transmits the encoding model of the learning result generated by the second UE 110B to the first UE 110A by using SL data communication via the protocol processing unit 121 and the terminal-side communication unit 111 (S21). The control unit 122 of the first UE 110A receives such an encoding model via the terminal-side communication unit 111 and the protocol processing unit 121. The control unit 122 of the first UE 110A then stores the encoding model in the memory unit 123.

Further, the control unit 122 of the second UE 110B instructs the first UE 110A to apply the encoding model transmitted in step S21 via the protocol processing unit 121 and the terminal-side communication unit 111 (S22).

The control unit 122 of the first UE 110A receives the instruction via the terminal-side communication unit 111 and the protocol processing unit 121 and applies the learned encoding model stored in the memory unit 123 (S23).

Then, the control unit 122 of the first UE 110A encodes the SL-CSI report with the learned encoding model and transmits the encoded SL-CSI report to the second UE 110B via the protocol processing unit 121 and the terminal-side communication unit 111 (S24).

The control unit 122 of the second UE 110B receives the encoded SL-CSI report via the terminal-side communication unit 111 and the protocol processing unit 121 and decodes the encoded SL-CSI report. Then, that control unit 122 analyzes the obtained SL-CSI signal to use it for actual PHY control (S25).

The control unit 122 of the second UE 110B may analyze the encoded SL-CSI report received in step S24 and perform re-learning to continually update the encoding and decoding models and apply them in a timely manner.

Here, when performing re-learning, the control unit 122 of the second UE 110B may perform re-learning by using the current encoding and decoding models, in other words, the encoding and decoding models after learning, or may perform re-learning by using the initial models, or may generate the encoding and decoding models by learning from the beginning.

If the result of the analysis indicates that using the learned encoding and decoding models increases the error, the control unit 122 of the second UE 110B may extend the signal indicating the application of the encoding model in step S13 and send an instruction to the first UE 110A not to use the encoding model to stop the process using the encoding and decoding models. For example, bit error rate, block error rate, throughput, delay time, or number of times of retransmissions may be used as an indicator of error. The base station can instruct the second UE 110B as to which indicator to use and what the threshold value should be.

As described above, in Embodiment 1, the communication system 100, which is a wireless communication system, has a first UE 110A and a second UE 110B that communicates with the first UE 110A through SL communication. The first UE 110A transmits, to the second UE 110B, encoded channel state information, which is channel state information encoded by using an encoding model learned for channel state information, which is information for reporting the channel state of the SL communication. The second UE 110B decodes that encoded channel state information by using the decoding model learned for the channel state information. Here, the encoding and decoding models are learned by the second UE 110B by using the learned channel state information transmitted by the first UE 110A. This allows the SL-CSI report, which is the channel state information, to be transmitted with reduced data volume by the encoding model, and such data can be decoded by using the decoding model.

In the embodiment 1 described above, the control unit 122 of the second UE 110B functions as a learning device, but embodiment 1 is not limited to such examples. For example, an encoder unit 113 or a decoder unit 118 of the second UE 110B may function as the learning device. In Embodiment 1, the unit functioning as a learning device is also referred to as the learning unit, and the memory unit 123 that stores the learned model is also referred to as the learned model memory unit.

In Embodiment 1, the control unit 122 of the first UE 110A performs encoding by using the encoding model which is the learned model, but Embodiment 1 is not limited to such examples. For example, the encoder unit 113 of the first UE 110A may perform encoding by using the encoding model. In Embodiment 1, the unit that performs encoding by using the encoding model as the inference device is also referred to as the model encoding unit.

Furthermore, in Embodiment 1, the control unit 122 of the second UE 110B performs decoding by using a decoding model which is a learned model, but Embodiment 1 is not limited to such examples. For example, the decoder unit 118 of the second UE 110B may perform decoding by using the decoding model. In Embodiment 1, the unit that performs decoding by using the decoding model as an inference device is also referred to as the model decoding unit.

### EMBODIMENT 2

In Embodiment 1, the encoding and decoding models are learned in the second UE 110B; however, there may be cases where the second UE 110B does not or cannot have a learning function due to reasons such as the computational processing load for learning is too large for the UE 110 to perform. Embodiment 2 describes an example in which learning is not performed by the UE but by the base station.

As shown in FIG. 1, the communication system 200 according to Embodiment 2 includes a UE 210, a base station 230, and the upper device 160.

The upper device 160 of the communication system 200 according to Embodiment 2 is the same as the upper device 160 of the communication system 100 according to Embodiment 1.

As shown in FIG. 2, the UE 210 in Embodiment 2 includes the terminal-side communication unit 111, the AP unit 120, the protocol processing unit 121, a control unit 222, and the memory unit 123.

The terminal-side communication unit 111, the AP unit 120, the protocol processing unit 121, and the memory unit 123 of the UE 210 in Embodiment 2 are the same as the terminal-side communication unit 111, the AP unit 120, the protocol processing unit 121, and the memory unit 123 of the UE 110 in Embodiment 1.

The control unit 222 controls a series of processes performed in the UE 210.

The control unit 222 also performs a process related to learning at the base station 230. This process is described below.

As shown in FIG. 4, the base station 230 in Embodiment 2 includes the station-side communication unit 131, the communication processing unit 140, the protocol processing unit 144, the control unit 245, and the memory unit 146.

The station-side communication unit 131, the communication processing unit 140, the protocol processing unit 144, and the memory unit 146 of the base station 230 in Embodiment 2 are the same as the station-side communication unit 131, the communication processing unit 140, the protocol processing unit 144, and the memory unit 146 of the base station 130 in Embodiment 1.

The control unit 245 controls a series of processes in the base station 230.

The control unit 245 also learns the encoding and decoding models. This process is described below.

In Embodiment 2, the base station 230 learns the encoding and decoding models. This configuration is described below.

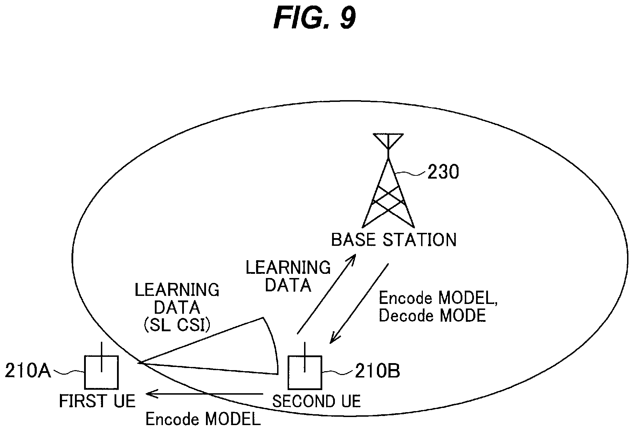

FIG. 9 shows an example of a configuration in which the base station 230 learns the encoding and decoding models and the UE 210 performs inference by using the learned encoding and decoding models in Embodiment 2.

In Embodiment 2, the base station 230 learns the encoding and decoding models, and the first UE 210A and the second UE 210B communicate by using the learned models.

Here, the first UE 210A is the data-receiving terminal device that transmits the SL-CSI, and the second UE 210B is the data-transmitting terminal device that receives the SL-CSI. The second UE 210B is in the coverage area of the base station 230 and ready to communicate.

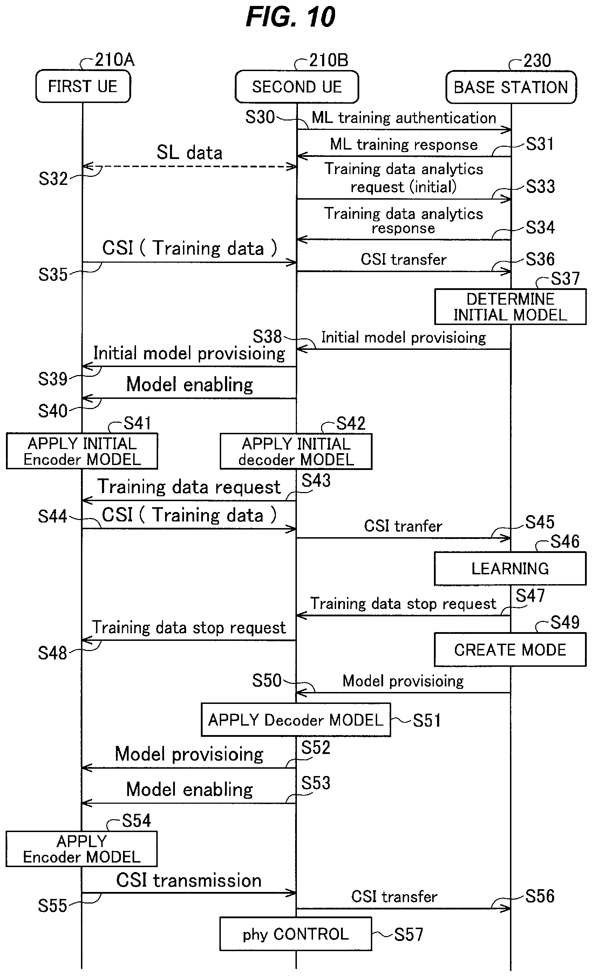

FIG. 10 is a sequence diagram of steps in learning the encoding and decoding models and applying the learned models in Embodiment 2.

When the second UE 210B enters the coverage area of the base station 230 and performs handover, or when the second UE 210B starts up within the coverage area of the base station 230, the control unit 222 of the second UE 210B requests registration and permission for SL communication to the base station 230 via the protocol processing unit 121 and the terminal-side communication unit 111. Here, the control unit 222 of the second UE 210B requests the base station 230 to perform the learning on the encoding and decoding of the SL-CSI (S30).

The control unit 245 of the base station 230 receives the request via the station-side communication unit 131, the communication processing unit 140, and the protocol processing unit 144, and if the base station 230 has a learning function, the base station 230 responds with the permission to the request via the protocol processing unit 144, the communication processing unit 140, and the station-side communication unit 131 to the second UE 210B (S31).

The control unit 222 of the first UE 210A and the control unit 222 of the second UE 210B establish SL communication at the PC5 interface via their respective protocol processing unit 121 and terminal-side communication unit 111 (S32). As a result, the first UE 210A and the second UE 210B are ready to communicate.

Next, in preparation for starting data transmission from the second UE 210B to the first UE 210A, the control unit 222 of the second UE 210B transmits a request to the base station 230 to obtain initial models for SL-CSI encoding and decoding via the protocol processing unit 121 and the terminal-side communication unit 111 (S33).

The control unit 245 of the base station 230 receives the request via the station-side communication unit 131, the communication processing unit 140, and the protocol processing unit 144, and if the base station 230 can handle the request, the base station 230 responds with the acceptance to the second UE 210B via the protocol processing unit 144, the communication processing unit 140, and the station-side communication unit 131 (S34).

The control unit 222 of the second UE 210B receives the response via the terminal-side communication unit 111 and the protocol processing unit 121 and starts transmitting the SL-CSI-RS without encoding, and the control unit 222 of the first UE 210A analyzes the SL-CSI information received via the terminal-side communication unit 111 and the protocol processing unit 121 and transmits the SL-CSI report to the second UE 210B via the protocol processing unit 121 and the terminal-side communication unit 111 (S35).

The control unit 222 of the second UE 210B receives the SL-CSI report via the station-side communication unit 131 and the protocol processing unit 144 and transfers the SL-CSI report unchanged to the base station 230 via the protocol processing unit 144 and the station-side communication unit 131 (S36).

The control unit 245 of the base station 230 receives the SL-CSI report via the station-side communication unit 131, the communication processing unit 140, and the protocol processing unit 144, and from that SL-CSI report, infers propagation conditions of radio waves transmitted from each transmitting antenna of the second UE 210B to each receiving antenna of the first UE 210A, and from among the initial encoding and decoding models prepared in advance or among the encoding and decoding models applied in other terminal devices, determines the most suitable ones for a transmission path from the second UE 210B to the first UE 210A as the initial models (S37).

For example, in Embodiment 2, multiple pairs of encoding and decoding models are stored in the memory unit 146, and the control unit 245 determines the initial encoding and decoding models to be used from among them.

Specifically, the memory unit 146 stores multiple pairs of encoding model and decoding model different in the number of intermediate nodes, the number of intermediate node stages, the number of branches connected to intermediate nodes, and the number of final nodes.

Since the control unit 245 can ascertain the received power intensity or the MIMO inter-antenna separation capability from the obtained SL-CSI report, the initial encoding and decoding models to be used may be determined such that the higher the intensity or the inter-antenna separation capability, the smaller at least one of the number of intermediate nodes, the number of intermediate node stages, the number of branches connected to intermediate nodes, and the number of final nodes.

The control unit 245 of the base station 230 then transmits the initial encoding and decoding models thus determined to the second UE 210B via the protocol processing unit 144, the communication processing unit 140, and the station-side communication unit 131 (S38). The control unit 222 of the second UE 210B receives the initial encoding and decoding models via the terminal-side communication unit 111 and the protocol processing unit 121 and stores the initial encoding and decoding models in the memory unit 123.

Here, each of the encoding model data and the decoding model data consists of the information (1) to (11) listed above.

Next, the control unit 222 of the second UE 210B transfers the initial encoding model received from the base station 230 in step S38 to the first UE 210A via the protocol processing unit 121 and the terminal-side communication unit 111 (S39). The control unit 222 of the first UE 210A receives the initial encoding model via the terminal-side communication unit 111 and the protocol processing unit 121 and stores the initial encoding model in the memory unit 123.

Next, the control unit 222 of the second UE 210B instructs the first UE 210A to apply the received encoding model via the protocol processing unit 121 and the terminal-side communication unit 111 (S40).

The control unit 222 of the first UE 210A receives the instruction via the terminal-side communication unit 111 and the protocol processing unit 121 and applies the encoding model stored in the memory unit 123 (S41).

In the second UE 210B, the control unit 222 also applies the decoding model stored in the memory unit 123 (S42).

Next, for learning, the control unit 222 of the second UE 210B transmits the SL-CSI-RS via the protocol processing unit 121 and the terminal-side communication unit 111 to the first UE 210A to request the SL-CSI report for training (S43). Here, that control unit 222 may specify in that request the number of times N of SL-CSI report transmissions for training.

The control unit 222 of the first UE 210A receives that request via the terminal-side communication unit 111 and the protocol processing unit 121 and, in response to the request, transmits the SL-CSI report for training via the protocol processing unit 121 and the terminal-side communication unit 111 (S44).

The control unit 222 of the second UE 210B receives that SL-CSI report via the terminal-side communication unit 111 and the protocol processing unit 121 and transfers that SL-CSI report to the base station 230 via the protocol processing unit 121 and the terminal-side communication unit 111 (S45).

Next, the control unit 245 of the base station 230 receives the transferred SL-CSI report via the station-side communication unit 131, the communication processing unit 140, and the protocol processing unit 144, and learns the encoding and decoding models (S46).

The control unit 245 of the base station 230 repeats the process of steps S44, S45, and S46, and when the number of times of SL-CSI report transmissions reaches a predetermined number of times N, or when it is determined that the data necessary for learning has been obtained, instructs the second UE 210B to stop transmitting training data via the protocol processing unit 144, the communication processing unit 140, and the station-side communication unit 131 (S47). Thus, that control unit 245 terminates the learning.

The control unit 222 of the second UE 210B receives the instruction via the terminal-side communication unit 111 and the protocol processing unit 121 and transfers the instruction to the first UE 210A via the terminal-side communication unit 111 and the protocol processing unit 121 (S48).

The control unit 245 of the base station 230 then generates updated encoding and decoding models from the learned models obtained by learning (S49). The decoding model after learning may be a model in which the numerical values of the elements or the combination of the configuration information itself is changed from the information in (1) to (11) above in the initial model.

The control unit 245 of the base station 230 transmits the generated encoding and decoding models to the second UE 210B via the protocol processing unit 144, the communication processing unit 140, and the station-side communication unit 131 (S50).

The control unit 222 of the second UE 210B receives the encoding and decoding models from the base station 230 via the terminal-side communication unit 111 and the protocol processing unit 121, stores the decoding model in the memory unit 123, and applies the decoding model (S51). Here, the control unit 222 of the second UE 210B functions as the inference device.

Next, the control unit 222 of the second UE 210B transmits the encoding model of the learning result received from the base station 230 to the first UE 210A by using SL data communication via the protocol processing unit 121 and the terminal-side communication unit 111 (S52). The control unit 222 of the first UE 210A receives that encoding model via the terminal-side communication unit 111 and the protocol processing unit 121 and stores the encoding model in the memory unit 123.

Further, the control unit 222 of the second UE 210B instructs the first UE 210A, to apply the encoding model transmitted in step S52 via the protocol processing unit 121 and the terminal-side communication unit 111 (S53).

The control unit 222 of the first UE 210A receives the instruction via the terminal-side communication unit 111 and the protocol processing unit 121 and applies the learned encoding model stored in the memory unit 123 (S54).

The control unit 222 of the first UE 210A encodes the SL-CSI report with the learned encoding model and starts transmitting it to the second UE 210B (S55).

The control unit 222 of the second UE 210B receives that encoded SL-CSI report via the terminal-side communication unit 111 and the protocol processing unit 121, transfers that encoded SL-CSI report to the base station 230 via the protocol processing unit 121 and the terminal-side communication unit 111(S56), decodes the encoded SL-CSI report, and analyzes the obtained SL-CSI signal to use it for actual PHY control (S57).

The control unit 245 of the base station 230 may analyze the encoded SL-CSI report received in step S56 and perform re-learning to continually update the encoding and decoding models and apply them in a timely manner.

Here, the decision and request for re-learning may be made by the second UE 210B or by the base station 230. Alternatively, the cycle of re-learning may be predetermined at the second UE 210B or at the base station 230.

The re-learning may be performed by using the current encoding and decoding models, the re-learning may be performed by using the initial encoding and decoding models, and furthermore, the encoding and decoding models may be learned from the beginning. The choice of updating the model or resetting the model may be determined by the second UE 210B or by the base station 230.

If the result of the analysis indicates that using the encoding and decoding models increases the error, the control unit 245 of the base station 230 may extend the signal indicating the application of the encoding model in step S40, the base station 230 may transmit an indication not to use the encoding model to the second UE 210B, and the second UE 210B may transfer a similar instruction to the first UE 210A to stop using the encoding and decoding models. For example, bit error rate, block error rate, throughput, delay time, or number of times of retransmissions may be used as an indicator of error.

As described above, in Embodiment 2, the communication system 200 includes a base station 230 that communicates with the second UE 210B via SL communication, and the base station 230 learns the encoding and decoding models by using the channel state information for learning transmitted by the first UE 210A. In other words, in Embodiment 2, on behalf of the second UE 210B, the base station 230 can learn the encoding and decoding models and distribute them to the second UE 210B and the first UE 210A. This makes it possible to reduce the data volume of the SL-CSI report.

In Embodiment 2, the second UE 210B receives the channel state information for learning transmitted by the first UE 210A and transfers the channel state information for learning to the base station 230.

### EMBODIMENT 3

In Embodiment 2, the second UE 210B needs to transfer the SL-CSI report received from the first UE 210A to the base station 230 each time for learning. In locations where the transmission path conditions do not change much, such as in flat, depopulated areas or at sea, the increase in processing volume or processing time due to the transfer can be mitigated by assuming that both the first UE 210A and the second UE 210B are within the coverage area of the base station 230, and directly receiving and learning the SL-CSI report transmitted from the first UE 210A by the base station 230.

As shown in FIG. 1, the communication system 300 according to Embodiment 3 includes a UE 310, a base station 330, and the upper device 160.

The upper device 160 of the communication system 300 according to Embodiment 3 is the same as the upper device 160 of the communication system 100 according to Embodiment 1.

As shown in FIG. 2, the UE 310 in Embodiment 3 includes the terminal-side communication unit 111, the AP unit 120, the protocol processing unit 121, a control unit 322, and the memory unit 123.

The terminal-side communication unit 111, the AP unit 120, the protocol processing unit 121, and the memory unit 123 of the UE 310 in Embodiment 3 are the same as the terminal-side communication unit 111, the AP unit 120, the protocol processing unit 121, and the memory unit 123 of the UE 110 in Embodiment 1.

The control unit 322 controls a series of processes performed in the UE 310.

The control unit 322 also performs a process related to learning at the base station 330. This process is described below.

As shown in FIG. 4, the base station 330 in Embodiment 3 includes the station-side communication unit 131, the communication processing unit 140, the protocol processing unit 144, a control unit 345, and the memory unit 146.

The station-side communication unit 131, the communication processing unit 140, the protocol processing unit 144, and the memory unit 146 of the base station 330 in Embodiment 3 are the same as the station-side communication unit 131, the communication processing unit 140, the protocol processing unit 144, and the memory unit 146 of the base station 130 in Embodiment 1.

The control unit 345 controls a series of processes in the base station 130.

The control unit 345 also learns the encoding and decoding models. This process is described below.

In Embodiment 3, the base station 330 learns the encoding and decoding models. The configuration is described below.

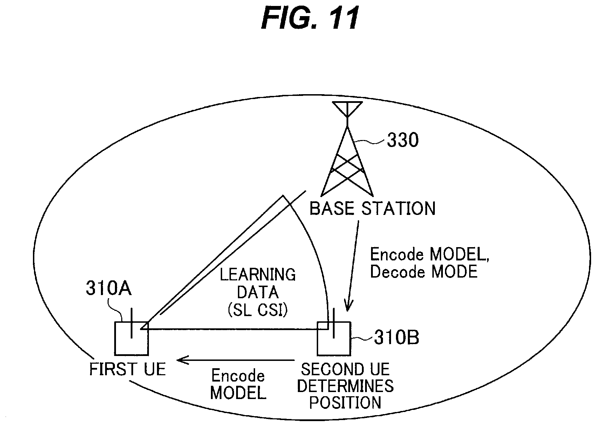

FIG. 11 shows an example of a configuration in which the base station 330 learns the encoding and decoding models and the UE 310 performs inference by using the learned encoding and decoding models in Embodiment 3.

In Embodiment 3, the base station 330 learns the encoding and decoding models, and the first UE 310A and the second UE 310B communicate by using the learned models.

Here, the first UE 310A is the data-receiving terminal device that transmits the SL-CSI, and the second UE 310B is the data-transmitting terminal device that receives the SL-CSI. In Embodiment 3, both the first UE 310A and the second UE 310B are in the coverage area of the base station 330 and ready to communicate.

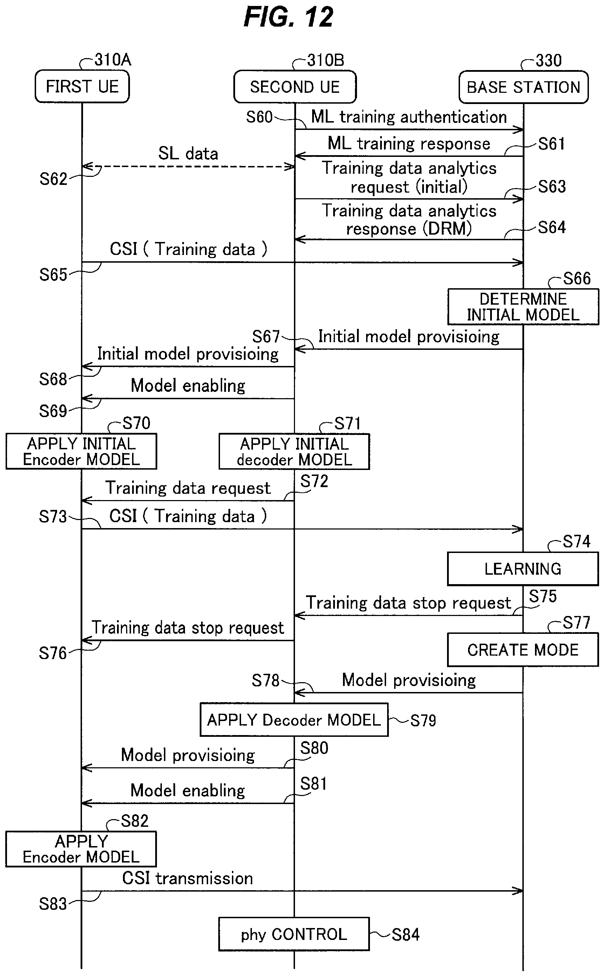

FIG. 12 is a sequence diagram of steps in learning the encoding and decoding models and applying the learned models in Embodiment 3.

When the second UE 310B enters the coverage area of the base station 330 and performs handover, or when the second UE 310B starts up within the coverage area of the base station 330, the control unit 322 of the second UE 310B requests registration and permission for SL communication to the base station 330 via the protocol processing unit 121 and the terminal-side communication unit 111. Here, the control unit 322 of the second UE 310B requests the base station 330 to perform the learning on the encoding and decoding of the SL-CSI (S60).

The control unit 345 of the base station 330 receives the request via the station-side communication unit 131, the communication processing unit 140, and the protocol processing unit 144, and if the base station 330 has a learning function, the base station 330 responds with the permission to the request via the protocol processing unit 144, the communication processing unit 140, and the station-side communication unit 131 to the second UE 310B (S61). In this case, that control unit 345 includes in its response information indicating that it has the capability to directly receive the SL-CSI and perform learning.

The control unit 322 of the first UE 310A and the control unit 322 of the second UE 310B establish the SL communication at the PC5 interface via their respective protocol processing units 121 and terminal-side communication units 111 (S62). As a result, the first UE 310A and the second UE 310B are ready to communicate.

Next, in preparation for starting data transmission from the second UE 310B to the first UE 310A, the control unit 322 of the second UE 310B transmits a request to the base station 330 to obtain initial models for SL-CSI encoding and decoding via the protocol processing unit 121 and the terminal-side communication unit 111 (S63). Here, that control unit 322 includes in that request information indicating that the first UE 310A is to transmit an SL-CSI report.

The control unit 345 of the base station 330 receives that request via the station-side communication unit 131 and the protocol processing unit 144, and if the base station 330 can handle the request, the base station 330 responds with acceptance to the second UE 310B via the protocol processing unit 144, the communication processing unit 140, and the station-side communication unit 131 (S64). Here, if the first UE 310A is in the coverage area and can communicate, the base station 330 directly receives the SL-CSI from the first UE 310A. In that case, that control unit 345 adds, to that response, information indicating the direct reception mode, which is the mode to receive the SL-CSI report directly from the first UE 310A.

The control unit 322 of the second UE 310B receives that response via the terminal-side communication unit 111 and the protocol processing unit 121 and starts transmitting the SL-CSI-RS without encoding, and the control unit 322 of the first UE 310A analyzes the SL-CSI information received via the terminal-side communication unit 111 and the protocol processing unit 121 and transmits the SL-CSI report via the protocol processing unit 121 and the terminal-side communication unit 111 (S65).

The control unit 322 of the second UE 310B receives the SL-CSI report transmitted from the first UE 310A via the station-side communication unit 131 and the protocol processing unit 144, but if the direct unit reception mode is designated, the SL-CSI report is not transferred to the base station 330.

On the other hand, the control unit 345 of the base station 330 receives the SL-CSI report from the first UE 310A via the station-side communication unit 131, the communication processing unit 140, and the protocol processing unit 144, and from that SL-CSI report, infers propagation conditions of radio waves transmitted from each transmitting antenna of the second UE 210B to each receiving antenna of the first UE 210A, and from among the initial encoding and decoding models prepared in advance, or among the encoding and decoding models applied in other terminal devices, determines the most suitable ones for a transmission path from the second UE 310B to the first UE 310A as the initial models (S66).

The control unit 345 of the base station 330 transmits the initial encoding and decoding models thus determined to the second UE 310B via the protocol processing unit 144, the communication processing unit 140, and the station-side communication unit 131 (S67). The control unit 322 of the second UE 310B receives the initial encoding and decoding models via the terminal-side communication unit 111 and the protocol processing unit 121 and stores the initial encoding and decoding models in the memory unit 123.

Here, each of the encoding model data and the decoding model data consists of the information (1) to (11) listed above.

Next, the control unit 322 of the second UE 310B transfers the initial encoding model received from the base station 330 in step S67 to the first UE 310A via the protocol processing unit 121 and the terminal-side communication unit 111 (S68). The control unit 322 of the first UE 310A receives that initial encoding model via the terminal-side communication unit 111 and the protocol processing unit 121 and stores the initial encoding model in the memory unit 123.

Next, the control unit 322 of the second UE 310B instructs the first UE 310A to apply the received encoding model via the protocol processing unit 121 and the terminal-side communication unit 111 (S69).

The control unit 322 of the first UE 310A receives the instruction via the terminal-side communication unit 111 and the protocol processing unit 121 and applies the encoding model stored in the memory unit 123 (S70).

In the second UE 310B, the control unit 322 also applies the decoding model stored in the memory unit 123 (S71).

Next, for learning, the control unit 322 of the second UE 310B transmits the SL-CSI-RS via the protocol processing unit 121 and the terminal-side communication unit 111 to the first UE 310A to request the SL-CSI report for training (S72). Here, that control unit 322 may specify in that request the number of times N of SL-CSI report transmissions for training.

The control unit 322 of the first UE 310A receives that request via the terminal-side communication unit 111 and the protocol processing unit 121 and, in response to the request, transmits the SL-CSI report for training via the protocol processing unit 121 and the terminal-side communication unit 111 (S73).

The control unit 322 of the second UE 310B receives that SL-CSI report via the terminal-side communication unit 111 and the protocol processing unit 121 but does not transfer the SL-CSI report to the base station 330 in the direct reception mode.

On the other hand, the control unit 345 of the base station 330 receives the SL-CSI report transmitted from the first UE 310A via the station-side communication unit 131, the communication processing unit 140, and the protocol processing unit 144 and learns the encoding and decoding models (S74).

The control unit 345 of the base station 330 repeats the process of steps S73 and S74, and when the number of times of SL-CSI report transmissions reaches a predetermined number of times N, or when it is determined that data necessary for learning has been obtained, instructs the second UE 310B to stop transmitting training data via the protocol processing unit 144, the communication processing unit 140, and the station-side communication unit 131 (S75). Thus, that control unit 345 terminates the learning.

The control unit 322 of the second UE 310B receives the instruction via the terminal-side communication unit 111 and the protocol processing unit 121 and transfers the instruction to the first UE 310A via the terminal-side communication unit 111 and the protocol processing unit 121 (S76).

The control unit 345 of the base station 330 then generates updated encoding and decoding models from the learned models obtained by learning (S77). The decoding model after learning may be a model in which the numerical values of the elements or the combination of the configuration information itself is changed from the information in (1) to (11) above in the initial model.

The control unit 345 of the base station 330 transmits the generated encoding and decoding models to the second UE 310B via the protocol processing unit 144, the communication processing unit 140, and the station-side communication unit 131 (S78).

The control unit 322 of the second UE 310B receives the encoding and decoding models from the base station 330 via the terminal-side communication unit 111 and the protocol processing unit 121, stores the decoding model in the memory unit 123, and applies the decoding model (S79). Here, the control unit 322 of the second UE 310B functions as the inference device.

Next, the control unit 322 of the second UE 310B transmits the encoding model of the learning result received from the base station 330 to the first UE 310A by using SL data communication via the protocol processing unit 121 and the terminal-side communication unit 111 (S80). The control unit 322 of the first UE 310A receives that encoding model via the terminal-side communication unit 111 and the protocol processing unit 121. The control unit 322 of the first UE 310A then stores that encoding model in the memory unit 123.

Further, the control unit 322 of the second UE 310B transmits, to the first UE 310A via the protocol processing unit 121 and the terminal-side communication unit 111, a signal instructing the first UE 310A to apply the encoding model transmitted in step S80 (S81).

In the first UE 310A that receives the instruction, the control unit 322 receives the instruction via the terminal-side communication unit 111 and the protocol processing unit 121 and applies the learned encoding model stored in the memory unit 123 (S82).

The control unit 322 of the first UE 310A then encodes the SL-CSI report with the learned encoding model and starts the transmission thereof (S83).

In the second UE 310B, the control unit 322 also receives the data received via the terminal-side communication unit 111 and protocol processing unit 121, decodes it and analyzes the obtained SL-CSI signal to use it for actual PHY control (S84). In the direct reception mode, the encoded SL-CSI report is not transferred.

The control unit 345 of the base station 330 may analyze the encoded SL-CSI report received in step S83 and perform re-learning to continually update the encoding and decoding models and apply them in a timely manner.

Here, the decision and request for re-learning may be made by the second UE 310B or by the base station 330. Alternatively, the cycle of re-learning may be predetermined at the second UE 310B or the base station 330.

The re-learning may be performed by using the current encoding and decoding models, the re-learning may be performed by using the initial encoding and decoding models, and furthermore, the encoding and decoding models may be learned from the beginning. The choice of updating the model or resetting the model may be determined by the second UE 310B or by the base station 330.

If the results of the analysis indicate that using the encoding and decoding models increases the error, the control unit 345 of the base station 330 may extend the signal indicating the application of the encoding model in step S69, the base station 330 may transmit an indication not to use the encoding model to the second UE 310B, and the second UE 310B may transfer a similar instruction to the first UE 310A to stop using the encoding and decoding models. For example, bit error rate, block error rate, throughput, delay time, or number of times of retransmissions may be used as an indicator of error.

As described above, in Embodiment 3, on behalf of the second UE 310B, the base station 330 can receive the SL-CSI report from the first UE 310A, learn the encoding and decoding models, and distribute them to the second UE 310B and the first UE 310A. This makes it possible to reduce the data volume of the SL-CSI report.

### EMBODIMENT 4

In SL communication, not only direct communication between UEs but also communication between UEs and the NetWork (NW) via a relay is proposed. In the following, the relay between the UE and the NW may be sometimes referred to as the UE-to-NW relay or the UE-NW relay. Furthermore, the UE that implements the relay between the UE and the NW may be referred to as the U2N relay.

Embodiment 4 shows an example in which a UE having U2N relay functionality performs learning on behalf of other UEs.

As shown in FIG. 1, the communication system 400 according to Embodiment 4 includes a UE 410, a base station 430, and the upper device 160.

The upper device 160 of the communication system 400 according to Embodiment 4 is the same as the upper device 160 of the communication system 100 according to Embodiment 1.

As shown in FIG. 2, the UE 410 in Embodiment 4 includes the terminal-side communication unit 111, the AP unit 120, the protocol processing unit 121, a control unit 422, and the memory unit 123.

The terminal-side communication unit 111, the AP unit 120, the protocol processing unit 121, and the memory unit 123 of the UE 410 in Embodiment 4 are the same as the terminal-side communication unit 111, the AP unit 120, the protocol processing unit 121, and the memory unit 123 of the UE 110 in Embodiment 1.

The control unit 422 controls a series of processes performed in the UE 410.

The control unit 422 also performs a process related to learning. This process is described below.

As shown in FIG. 4, the base station 430 in Embodiment 4 includes the station-side communication unit 131, the communication processing unit 140, the protocol processing unit 144, a control unit 445, and the memory unit 146.

The station-side communication unit 131, the communication processing unit 140, the protocol processing unit 144, and the memory unit 146 of the base station 430 in Embodiment 4 are the same as the station-side communication unit 131, the communication processing unit 140, the protocol processing unit 144, and the memory unit 146 of the base station 130 in Embodiment 1.

The control unit 445 controls a series of processes in the base station 430.

The control unit 445 also makes the U2N relay learn the encoding and decoding models. This process is described below.

In Embodiment 4, the U2N relay learns the encoding and decoding models. The configuration is described below.

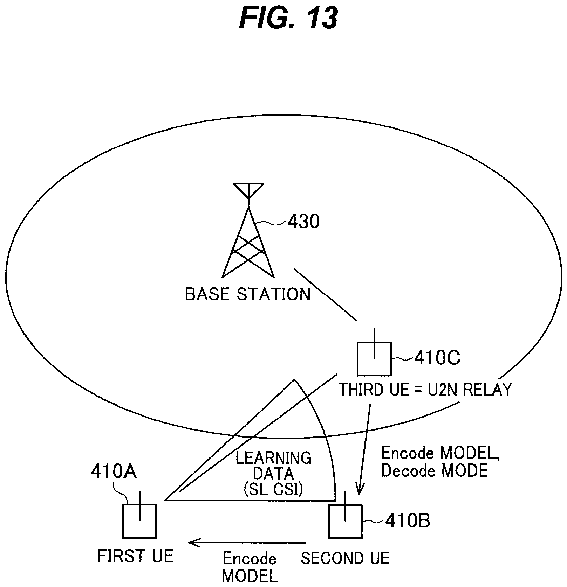

FIG. 13 shows an example of a configuration in which a U2N relay learns the encoding and decoding models and the UE 410 performs inference by using the learned encoding and decoding models in Embodiment 4.

In Embodiment 4, the U2N relay learns the encoding and decoding models, and the first UE 410A and the second UE 410B communicate by using the learned models.

Here, the first UE 410A is the MIMO receiving terminal device transmitting the SL-CSI, the second UE 410B is the MIMO transmitting terminal device receiving the SL-CSI, and the third UE 410C is the U2N relay. In Embodiment 4, the first UE 410A and the second UE 410B are out of the coverage area of the base station 430 but can communicate with the base station 430 via the third UE 410C.

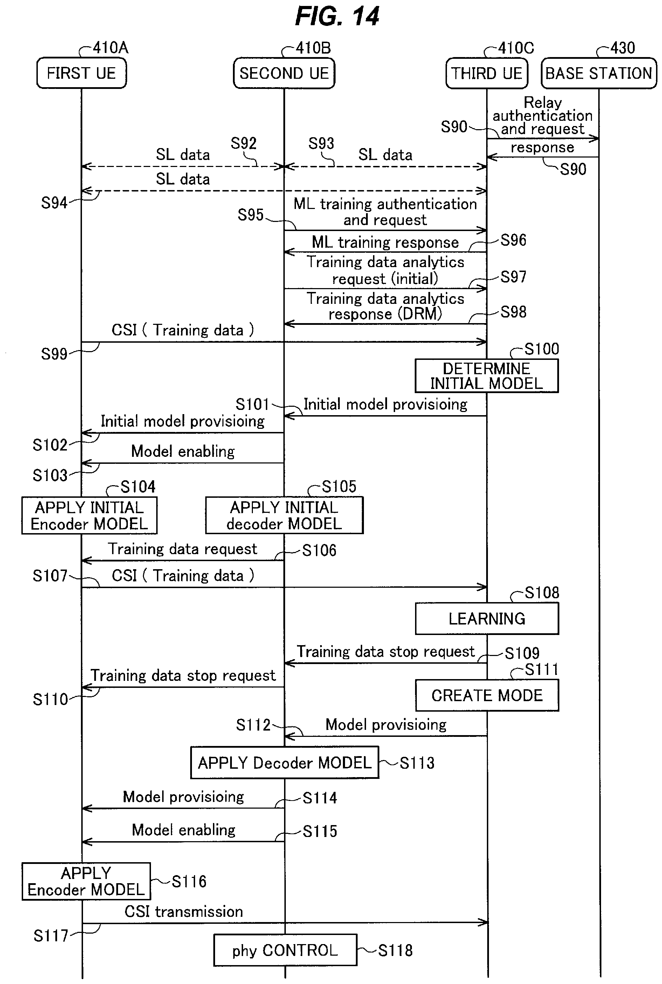

FIG. 14 is a sequence diagram of steps in learning the encoding and decoding models and applying the learned models in Embodiment 4.

When the third UE 410C enters the coverage area of the base station 430 and performs handover, or when the third UE 410C starts up within the coverage area of the base station 430, the control unit 422 of the third UE 410C requests registration and permission for SL communication and use of the U2N relay to the base station 430 via the protocol processing unit 121 and the terminal-side communication unit 111. Here, the control unit 422 of the third UE 410C requests permission from the base station 430 to perform learning on behalf of the other UE 410 regarding the encoding and decoding of the SL-CSI (S90).

The control unit 445 of the base station 430 receives the request via the station-side communication unit 131, the communication processing unit 140, and the protocol processing unit 144, and responds to the request with the permission for the third UE 410C to perform the relay function via the protocol processing unit 144, the communication processing unit 140, and the station-side communication unit 131 (S91).

Next, the control unit 422 of the first UE 410A, the control unit 422 of the second UE 410B, and the control unit 422 of the third UE 410C establish SL communication at the PC5 interface via their respective protocol processing unit 121 and terminal-side communication unit 111 (S92 to S94). As a result, the first UE 410A, the second UE 410B, and the third UE 410C are ready for mutual communication.

The control unit 422 of the second UE 410B asks the third UE 410C, which is a U2N relay, via the protocol processing unit 121 and the terminal-side communication unit 111, whether the third UE 410C has the function to perform the learning function on behalf (S95).

The control unit 422 of the third UE 410C receives the inquiry via the terminal-side communication unit 111 and the protocol processing unit 121 and makes a response indicating that it has such a function and will perform the learning function on behalf to the second UE 410B via the protocol processing unit 121 and the terminal-side communication unit 111 (S96).

Next, in preparation for starting data transmission from the second UE 410B to the first UE 410A, the control unit 422 of the second UE 410B transmits a request to the third UE 410C to obtain an initial model for SL-CSI encoding and decoding via the protocol processing unit 121 and the terminal-side communication unit 111 (S97).

The control unit 422 of the third UE 410C receives that request via the terminal-side communication unit 111 and the protocol processing unit 121, and if the third UE 410C can handle the request, the third UE 410C responds with acceptance to the second UE 410B via the protocol processing unit 121 and the terminal-side communication unit 111 (S98).

The control unit 422 of the second UE 410B receives the response via the terminal-side communication unit 111 and the protocol processing unit 121 and starts transmitting the SL-CSI-RS without encoding, and the control unit 422 of the first UE 410A analyzes the SL-CSI information received via the terminal-side communication unit 111 and the protocol processing unit 121 and transmits the SL-CSI report via the protocol processing unit 121 and the terminal-side communication unit 111 (S99). Here, an example of the first UE 410A transmitting the SL-CSI report directly to the third UE 410C is shown, but the second UE 410B may perform the transfer, as in Embodiment 2.

The control unit 422 of the third UE 410C receives the SL-CSI report from the first UE 410A via the terminal-side communication unit 111 and the protocol processing unit 121, and from that SL-CSI report, infers propagation conditions of radio waves transmitted from each transmitting antenna of the second UE 410B to each receive antenna of the first UE 410A, and from among the initial encoding and decoding models prepared in advance or among the encoding and decoding models applied in other terminal devices, determines the most suitable ones for a transmission path from the second UE 410B to the first UE 410A as the initial models (S100). In Embodiment 4, it is assumed that a plurality of pairs of initial encoding and decoding models are stored in the memory unit 123 of the third UE 410C.

The control unit 422 of the third UE 410C then transmits the initial encoding and decoding models thus determined to the second UE 410B via the protocol processing unit 121 and the terminal-side communication unit 111 (S101). The control unit 422 of the second UE 410B receives the initial encoding and decoding models via the terminal-side communication unit 111 and the protocol processing unit 121 and stores the initial encoding and decoding models in the memory unit 123.

Here, each of the encoding model data and the decoding model data consists of the information (1) to (11) listed above.

Next, the control unit 422 of the second UE 410B transfers the initial encoding model received from the third UE 410C in step S101 to the first UE 410A via the protocol processing unit 121 and the terminal-side communication unit 111 (S102). The control unit 422 of the first UE 410A receives the initial encoding model via the terminal-side communication unit 111 and the protocol processing unit 121 and stores the initial encoding model in the memory unit 123.

Next, the control unit 422 of the second UE 410B instructs the first UE 410A to apply the received encoding model via the protocol processing unit 121 and the terminal-side communication unit 111 (S103).

The control unit 422 of the first UE 410A receives the instruction via the terminal-side communication unit 111 and the protocol processing unit 121 and applies the encoding model stored in the memory unit 123 according to the instruction (S104).

In the second UE 410B, the control unit 422 also applies the decoding model stored in the memory unit 123 (S105).

Next, for learning, the control unit 422 of the second UE 410B transmits the SL-CSI-RS via the protocol processing unit 121 and the terminal-side communication unit 111 to the first UE 410A to request the transmission of the SL-CSI report for training (S106). At this time, that control unit 422 may specify in that request the number of times N of SL-CSI report transmissions for training.

The control unit 422 of the first UE 410A receives that request via the terminal-side communication unit 111 and the protocol processing unit 121, and in response to the request, transmits the SL-CSI report for training via the protocol processing unit 121 and the terminal-side communication unit 111 (S107).

The control unit 422 of the third UE 410C receives that SL-CSI report via the terminal-side communication unit 111 and the protocol processing unit 121 and learns the encoding and decoding models (S108).

The control unit 422 of the third UE 410C repeats the process of steps S107 and S108, and when the number of SL-CSI report transmissions reaches a predetermined number of times N, or when it is determined that the data necessary for learning has been obtained, instructs the second UE 410B to stop transmitting training data via the protocol processing unit 121 and the terminal-side communication unit 111 (S109). As a result, that control unit 422 terminates the learning.

The control unit 322 of the second UE 410B receives the instruction via the terminal-side communication unit 111 and the protocol processing unit 121 and transfers the instruction to the first UE 410A via the terminal-side communication unit 111 and the protocol processing unit 121 (S110).

The control unit 422 of the third UE 410C then generates updated encoding and decoding models from the learned models obtained by learning (S111). The decoding model after learning may be a model in which the numerical values of the elements or the combination of the configuration information itself is changed from the information in (1) to (11) above in the initial model.

The control unit 422 of the third UE 410C transmits the generated encoding and decoding models to the second UE 410B via the protocol processing unit 121 and the terminal-side communication unit 111 (S112).

The control unit 422 of the second UE 410B receives the encoding and decoding models from the third UE 410C via the terminal-side communication unit 111 and the protocol processing unit 121, stores the decoding model in the memory unit 123, and applies the decoding model (S113). Here, the control unit 422 of the second UE 410B functions as the inference device.

Next, the control unit 422 of the second UE 410B transmits the encoding model of the learning result received from the third UE 410C to the first UE 410A by using SL data communication via the protocol processing unit 121 and the terminal-side communication unit 111 (S114). This encoding model is received by the terminal-side communication unit 111 of the first UE 410A and provided to the control unit 422 via the protocol processing unit 121. The control unit 422 of the first UE 410A then stores that encoding model in the memory unit 123.

Further, the control unit 422 of the second UE 410B transmits a signal to the first UE 410A via the protocol processing unit 121 and the terminal-side communication unit 111, instructing the first UE 410A to apply the encoding model transmitted in step S114 (S115).

The control unit 422 of the first UE 410A receives the instruction via the terminal-side communication unit 111 and the protocol processing unit 121, and applies the learned encoding model stored in the memory unit 123 according to the instruction (S116).

The control unit 422 of the first UE 410A encodes the SL-CSI report with the learned encoding model and starts the transmission thereof (S117).

The control unit 422 of the second UE 310B receives the encoded SL-CSI report via the terminal-side communication unit 111 and the protocol processing unit 121, decodes the encoded SL-CSI report, and analyzes the obtained CSI signal to use it for actual PHY control (S118). In the direct reception mode, the encoded SL-CSI report is not transferred.

The control unit 422 of the third UE 410C may analyze the encoded SL-CSI report received via the terminal-side communication unit 111 and the protocol processing unit 121 and perform re-learning to continually update the encoding and decoding models and apply them in a timely manner.

Here, the decision and request for re-learning may be made by the second UE 410B or by the third UE 410C. Alternatively, the cycle of re-learning may be predetermined at the second UE 410B or the third UE 410C.

The re-learning may be performed by using the current encoding and decoding models, the re-learning may be performed by using the initial encoding and decoding models, and furthermore, the encoding and decoding models may be learned from the beginning. The choice of updating the model or resetting the model may be determined by the second UE 410B or by the third UE 410C.

If the result of the analysis indicates that using the encoding and decoding models increases the error, the control unit 422 of the third UE 410C may extend the signal indicating the application of the encoding model in step S103, the third UE 410C may transmit an indication not to use the encoding model to the second UE 410B, and the second UE 410B may transfer a similar instruction to the first UE 410A to stop using the encoding and decoding models. For example, bit error rate, block error rate, throughput, delay time, or number of times of retransmissions may be used as an indicator of error. The base station can instruct the second UE 410B as to which indicator to use and what the threshold value should be.

As described above, in Embodiment 4, the communication system 400 includes the third UE 410C that communicates with the first UE 410A and the second UE 410B via SL communication, and the third UE 410C uses the channel state information for learning transmitted by the first UE 410A to learn the encoding and decoding models. This enables the U2N relay in Embodiment 4 to perform the learning process on behalf of the other UEs 410, generate the encoding and decoding models, and apply them to the UEs 410 for SL communication, thereby reducing the data volume of the SL-CSI report.

Here, in Embodiment 4, the second UE 410B may receive the channel state information for learning transmitted by the first UE 410A, and the second UE 410B may transfer the channel state information for learning to the third UE 410C, or the third UE 410C may directly receive the channel state information for learning transmitted by the first UE 410A.

### DESCRIPTION OF REFERENCE CHARACTERS

100, 200, 300, 400 communication system, 110, 210, 310, 410 UE, 111 terminal-side communication unit, 120 AP unit, 121 protocol processing unit, 122, 222, 322, 422 control unit, 123 memory unit, 130, 230, 330, 430 base station, 131 station-side communication unit, 140 communication processing unit, 144 protocol processing unit, 145 control unit, 146 control unit, 160 upper device, 161 data network communication unit, 162 base station communication unit, 163 user plane communication unit, 164 session management unit, 165 control plane control unit, 169 control unit

## Claims

1. A wireless communication system comprising: a first terminal device; and a second terminal device to communicate with the first terminal device by Side Link (SL) communication, wherein
the first terminal device transmits encoded channel state information to the second terminal device, the encoded channel state information being channel state information encoded by using an encoding model learned for the channel state information, the channel state information being information for reporting the channel state of the SL communication, and
the second terminal device decodes the encoded channel state information by using a decoding model learned for the channel state information.

2. The wireless communication system according to claim 1, wherein the second terminal device learns the encoding and decoding models by using the channel state information for learning transmitted by the first terminal device.

3. The wireless communication system according to claim 1, further comprising:
a base station to communicate with the second terminal device via the SL communication, wherein
the base station learns the encoding and decoding models by using the channel state information for learning transmitted by the first terminal device.

4. The wireless communication system according to claim 3, wherein
the first terminal device transmits the channel state information for learning,
the second terminal device receives the channel state information for learning transmitted by the first terminal device and transfers the channel state information to the base station, and
the base station receives the channel state information for learning transferred by the second terminal device.

5. The wireless communication system according to claim 3, wherein
the first terminal device transmits the channel state information for learning, and
the base station receives the channel state information for learning transmitted by the first terminal device.

6. The wireless communication system according to claim 1, further comprising:
a third terminal device to communicate with the first terminal device and the second terminal device via the SL communication, wherein
the third terminal device learns the encoding and decoding models by using the channel state information for learning transmitted by the first terminal device.

7. The wireless communication system according to claim 6, wherein
the first terminal device transmits the channel state information for learning,
the second terminal device receives the channel state information for learning transmitted by the first terminal device and transfers the channel state information to the third terminal device, and
the third terminal device receives the channel state information for learning transferred by the second terminal device.

8. The wireless communication system according to claim 6, wherein
the first terminal device transmits the channel state information for learning, and
the third terminal device receives the channel state information for learning transmitted by the first terminal device.
